(19) Europäisches Patentamt
European Patent Office
Office européen des brevets

(11) **EP 1 364 858 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.⁷: **B62D 7/14**, F15B 20/00, F15B 15/14

(21) Anmeldenummer: **02011715.6**

(22) Anmeldetag: **25.05.2002**

(54) **Hinter-Achse für ein Fahrzeug**

Rear axle for a vehicle

Essieu arrière pour véhicule

(84) Benannte Vertragsstaaten:
**DE FR IT**

(43) Veröffentlichungstag der Anmeldung:
**26.11.2003 Patentblatt 2003/48**

(73) Patentinhaber: **FAUN GmbH**
**91207 Lauf (DE)**

(72) Erfinder: **Godel, Dieter**
**71686 Remseck (DE)**

(74) Vertreter: **Rau, Manfred, Dr. Dipl.-Ing. et al**
**Rau, Schneck & Hübner**
**Patentanwälte**
**Königstrasse 2**
**90402 Nürnberg (DE)**

(56) Entgegenhaltungen:
FR-A- 1 562 647    FR-A- 2 670 716
NL-C- 1 011 893    US-A- 4 953 445
US-A- 5 086 863    US-A- 6 019 026

• PATENT ABSTRACTS OF JAPAN vol. 012, no. 236 (M-715), 6. Juli 1988 (1988-07-06) & JP 63 028769 A (HINO MOTORS LTD), 6. Februar 1988 (1988-02-06)

**Beschreibung**

Die Erfindung betrifft eine Hinter-Achse für ein Fahrzeug entsprechend dem Oberbegriff des Anspruches 1.

Bei schweren Kraftfahrzeugen, beispielsweise Kranfahrzeugen, die oft mehrere Hinter-Achsen aufweisen, weist mindestens eine, oft sogar mehrere Hinter-Achsen lenkbare Hinter-Räder auf, die den Lenkbewegungen der Vorder-Räder in einer elektronisch gesteuerten Folgesteuerung folgen. Die lenkbaren Hinter-Räder werden mittels hydraulisch beaufschlagbarer Lenkantriebe gelenkt, die wiederum von einer Druckflüssigkeits-Hauptversorgungs-Einheit mit Druckflüssigkeit versorgt werden. Wenn diese Hauptversorgungs-Einheit während des Fahrbetriebes ausfällt, oder wenn eine gravierende Leckage auftritt, oder wenn die Steuer-Elektronik ausfällt, dann besteht die Gefahr, dass das Fahrzeug auf Grund fehlender oder unerwünschter Lenkbewegung der Hinter-Räder außer Kontrolle gerät. Aus der Praxis ist es daher bekannt, eine zusätzliche Pumpe vorzusehen, die bei Ausfall der Hauptversorgungs-Einheit die Versorgung der Lenkantriebe übernimmt. Eine derartige Druckflüssigkeits-Notversorgungs-Einheit kann entweder elektrisch angetrieben werden oder aber über eine Achse mit einem Rad gekoppelt sein, sodass sie arbeitet, solange das Rad sich bewegt.

Aus der US 4,953,455 A ist eine Hinter-Achse mit lenkbaren Hinter-Rädem bekannt, bei der die Betätigungs-Antriebe beim Ausfall der Hydraulikversorgung in ihrer Position blockiert werden und zwar mittels Rückschlag-Ventilen. Bei Eintritt verschiedener Bedingungen, beispielsweise ausreichend niedriger Geschwindigkeit, wird ein Hilfsantrieb zugeschaltet, der die Kolben der Kolben-Zylinder-Antriebe wieder in ihre Mittel-Stellung bringt.

Weiterhin sind aus "Technische Beschreibung , Typ: SLC 017 050 " der MOBIL ELEKTRONIK GMBH sogenannte selbstzentrierende hydraulisch beaufschlagbare Lenkantriebe bekannt, die ein gesondertes Zentrierteil aufweisen, was zu einer großen Baulänge des Lenkantriebs und einer aufwendigen und damit kostenintensiven Konstruktion führt. Zu dem wird eine Hinter-Achse nach dem Oberbegriff des Anspruchs 1 von NL 1.011.893 C gezeigt.

Der Erfindung liegt die Aufgabe zu Grunde, eine Hinter-Achse der gattungsgemäßen Art so auszugestalten, dass mit besonders einfachen Mitteln eine Selbstzentrierung in der Mittel-Stellung für Geradeaus-Fahrt erreicht wird.

Diese Aufgabe wird erfindungsgemäß durch die Merkmale im Kennzeichnungsteil des Anspruches 1 gelöst. Der Kern der Erfindung liegt darin, dass in der Mittel-Stellung die beiden Kolben des mindestens einen Lenkantriebs sich jeweils in einer Endlage befinden, in der sie bei einer Not-Zentrierung der Hinter-Räder in ihrer Mittel-Stellung lediglich durch entsprechende einseitige Druckflüssigkeits-Beaufschlagung fixiert werden müssen. Es sind also keine gesonderten Maßnahmen zur Fixierung der Kolben in einer vorgegebenen Mittel-Stellung der Räder notwendig.

Vorteilhafte Weiterbildungen der Erfindung ergeben sich aus den Unteransprüchen.

Ausführungsbeispiele der Erfindung werden nachfolgend an Hand der Zeichnung näher erläutert. Es zeigt:

Fig. 1   eine schematische Ansicht einer Hinter-Achse mit in Mittel-Stellung befindlichen Hinter-Rädern,

Fig. 2   die Hinter-Achse mit nach rechts gelenkten Hinter-Rädern,

Fig. 3   die Hinter-Achse mit nach links gelenkten Rädern,

Fig. 4   eine Hinter-Achse mit nur einem Lenkantrieb und

Fig. 5   eine Hinter-Achse mit nur einem Lenkantrieb und einem zusätzlichen Kolben-Zylinder-Antrieb

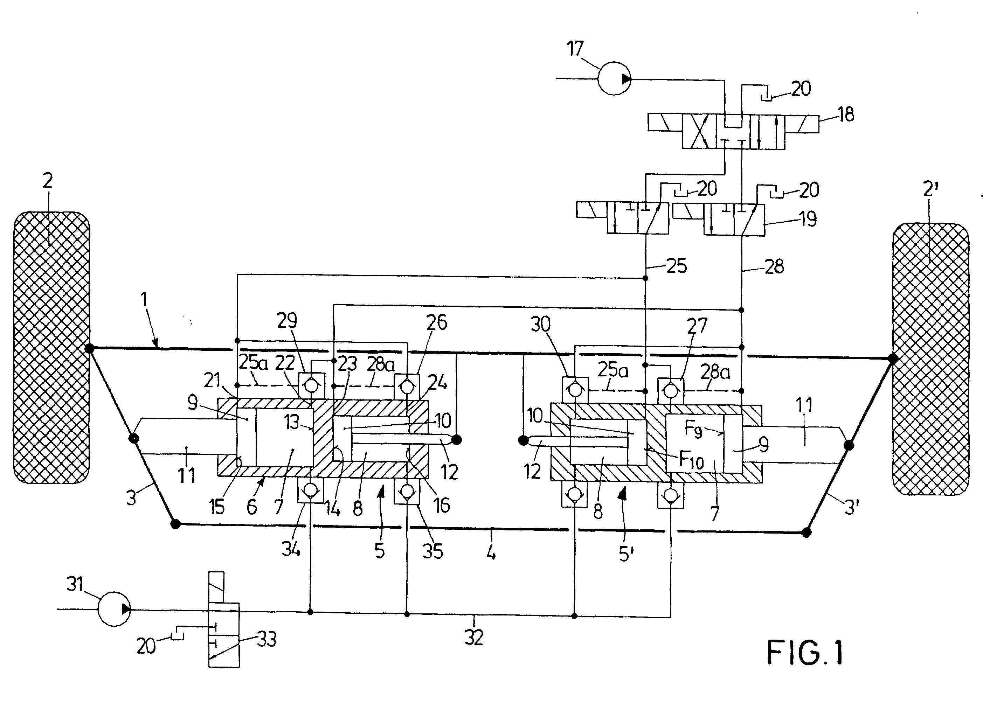

Bei der in den Figuren 1 bis 3 dargestellten Hinter-Achse handelt es sich um die gelenkte Hinter-Achse eines Schwerfahrzeuges, beispielsweise eines Kranfahrzeuges. Derartige Hinter-Achsen werden über eine Folgesteuerung beim Lenken der Vorderachse mitgelenkt. Die Hinter-Achse weist einen Hinterachs-Körper 1 auf und stützt einen nicht dargestellten Fahrzeugaufbau über Hinter-Räder 2 auf dem Boden ab. Die Räder 2, 2' sind durch eine ihre Achsschenkel 3, 3' verbindende Spurstange 4, miteinander gekoppelt, sodass sie gleichförmig Lenkbewegungen ausführen.

Der Lenkantrieb erfolgt mittels zweier identisch ausgebildeter, spiegelsymmetrisch zueinander angeordneter, hydraulisch beaufschlagbarer Lenkantriebe 5, 5'. Da beide Lenkantriebe 5, 5' identisch ausgebildet sind, bedarf es nur der Beschreibung eines Lenkantriebes. Jeder Lenkantrieb 5, 5' weist ein zylindrisches Gehäuse 6 auf, in dem zwei vollständig voneinander getrennte, miteinander fluchtende Zylinder-Räume 7, 8 unterschiedlichen Querschnitts ausgebildet sind. In dem jeweiligen Zylinder-Raum 7, 8 ist ein beidseitig beaufschlagbarer Kolben 9, 10 verschiebbar angeordnet, der jeweils an einer Kolbenstange 11, 12 angebracht ist, die wiederum jeweils zum entgegengesetzten Ende des Gehäuses 6 herausgeführt ist. Die Kolben 9, 10 und die Kolbenstangen 11,12 fluchten miteinander. Die aus den aneinander abgewandten Enden der Gehäuse 6 herausgeführten Kolbenstangen 11 sind an dem jeweiligen Achsschenkel 3, 3' angelenkt, während die aus den einander zugewandten Enden der Gehäuse 6 herausgeführen Kolbenstangen 12 fest mit dem Hinterachs-Körper 1 verbunden sind. Die Gehäuse 6 selbst sind frei verschiebbar angeordnet. Die Kolben 9, 10 sind in den Zylinder-Räumen 7, 8 derart verschiebbar angeordnet, dass deren Enden jeweils eine innere Endlage 13 für den Kolben 9 bzw. eine innere Endlage 14 für den Kolben 10 bzw. eine äußere Endlage 15 für den Kolben 9 bzw. eine äußere Endlage 16 für den Kolben 10 bilden.

Für die Kolben-Fläche $F_9$ der mit dem jeweiligen Achsschenkel 3, 3' gekoppelten Kolben 9 gilt im Vergleich zur Kolben-Fläche $F_{10}$ der mit dem Hinterachs-Körper 1 gekoppelten Kolben 10

$$F_9 > F_{10}.$$

Für die Kolben-Ring-Fläche F9-11 zwischen dem Kolben 9 und seiner Kolbenstange 11 gilt im Vergleich zur Kolben-Ring-Fläche $F_{10-12}$ zwischen dem Kolben 10 und seiner Kolbenstange 12

$$F_{9-11} < F_{10-12}.$$

Die hydraulische Ansteuerung und Beaufschlagung der Kolben 9, 10 erfolgt im normalen Fahrbetrieb durch eine als Pumpe angedeutete Druckflüssigkeits-Hauptversorgungs-Einheit 17 des Fahrzeuges. Die Ansteuerung erfolgt über zwei elektromagnetisch betätigte Mehrwege-Ventile 18, 19, über die die Druckflüssigkeit bei Druckentlastung in einen Druckflüssigkeits-Tank 20 zurückfließt. Die vier Zylinder-Räume 7, 8 der Lenkantriebe 5, 5' haben vier als Ein- und Ausgänge für die Druckflüssigkeit dienende Anschlüsse 21, 22, 23, 24, die jeweils im Bereich der Endlagen 13 bis 16 in den entsprechenden Zylinder-Raum 7 bzw. 8 einmünden. Der der Kolben-Ringfläche $F_{9-11}$ zugeordnete Anschluss 21 des einen Lenkantriebs 5 wird gemeinsam mit der Kolbenfläche $F_{10}$ des anderen Lenkantriebs 5' mit Druckflüssigkeit beaufschlagt bzw. druckentlastet, und zwar über eine gemeinsame Druckflüssigkeits-Leitung 25. Von dieser Druckflüssigkeits-Leitung 25 werden weiterhin die Kolben-Ring-Fläche $F_{10-12}$ des Lenkantriebs 5 und die Kolbenfläche $F_9$ des Lenkantriebs 5' versorgt und zwar unter Zwischenschaltung von Rückschlag-Ventilen 26, 27. Die Kolben-Fläche $F_{10}$ des Lenkantriebs 5 und die Kolben-Ring-Fläche $F_{9-11}$ des Lenkantriebs 5' wird gemeinsam über eine zweite Druckflüssigkeits-Leitung 28 mit Druckflüssigkeit beaufschlagt bzw. druckentlastet. An diese Leitung 28 können die Kolben-Flächen $F_9$ des Lenkantriebs 5 und die Kolben-Ring-Fläche $F_{10-12}$ des Lenkantriebs 5' angeschlossen werden, und zwar über Rückschlag-Ventile 29, 30. Die Rückschlag-Ventile 26, 27, 29, 30 sperren grundsätzlich gegen einen Abfluss von Druckflüssigkeit aus dem entsprechenden Zylinder-Raum 7, 8 nach außen. Sie werden bei Druckbeaufschlagung in der jeweils anderen Druckflüssigkeits-Leitung 25, 28 durch deren Druck geöffnet, sodass dann ein Abfluss von Druckflüssigkeit über die jeweils andere druckentlastete Leitung 28, 25 möglich ist. Die Verbindung ist über Aufsteuer-Leitungen 25a und 28a hergestellt.

Der normale Lenkbetrieb geht wie folgt vor sich:

Bei der in Fig. 1 dargestellten Mittelstellung der Hinter-Räder 2, 2' befinden sich die Kolben 9 der Lenkantriebe 5, 5' in ihrer äußeren Endlage 15. Die inneren Kolben 10 befinden sich jeweils in ihrer inneren Endlage 14.

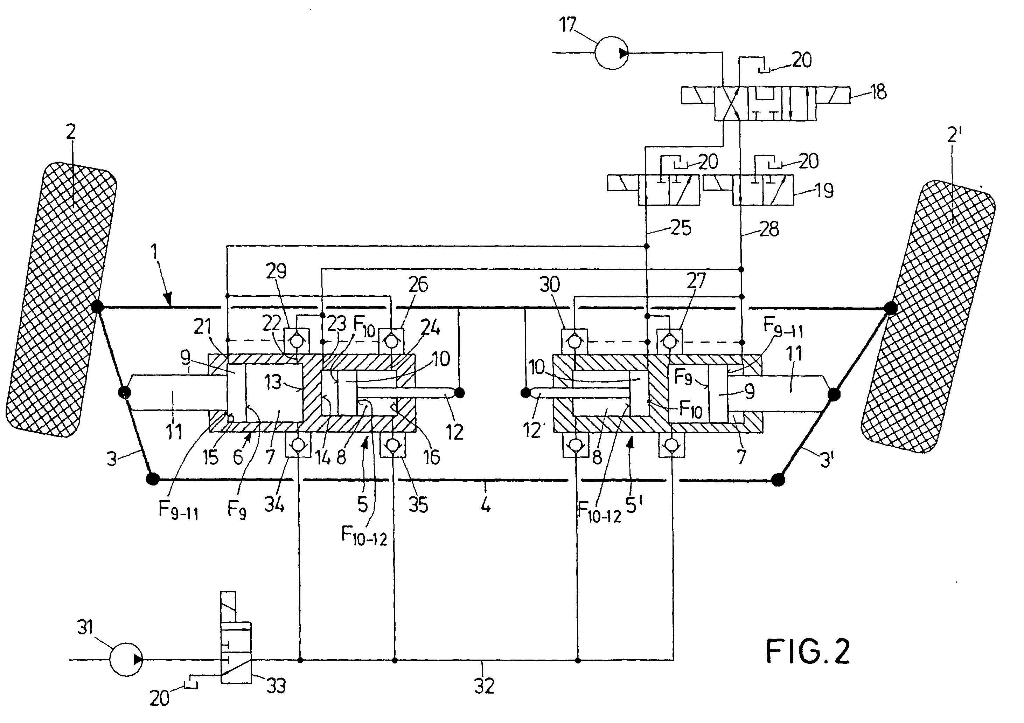

Wenn - entsprechend der Darstellung in Fig. 2 - die Räder 2, 2' nach rechts eingeschlagen werden sollen, dann werden hierzu die beiden nach rechts gerichteten Kolben, nämlich der Kolben 10 des Lenkantriebs 5 und der Kolben 9 des Lenkantriebs 5' über die zweite Druckflüssigkeits-Leitung 28 mit Druckflüssigkeit beaufschlagt, und zwar der Kolben 10 auf seiner Kolben-Fläche $F_{10}$ und der Kolben 9 auf seiner Kolben-Ring-Fläche $F_{9-11}$, sodass die Kolbenstange 12 des Lenkantriebs 5 aus dem Gehäuse 6 ausfährt, während die Kolbenstange 11 des Lenkantriebs 5' in dessen Gehäuse 6 einfährt. Gleichzeitig werden die Rückschlag-Ventile 29, 30 entsperrt, sodass der Druck der Druckflüssigkeit aus der zweiten Druckflüssigkeits-Leitung 28 den Kolben 9 des Lenkantriebs 5 und den Kolben 10 des Lenkantriebs 5' in ihrer Endlage 15 bzw. 14 halten bzw. fixieren. Die Lenkbewegung nach rechts wird also jeweils nur von einem Kolben jedes Lenkantriebs 5, 5' ausgeführt. Die erste Druckflüssigkeits-Leitung 25 ist hierbei drucklos gemacht, wie sich aus den Stellungen der Ventile 18, 19 in Fig. 2 ergibt.

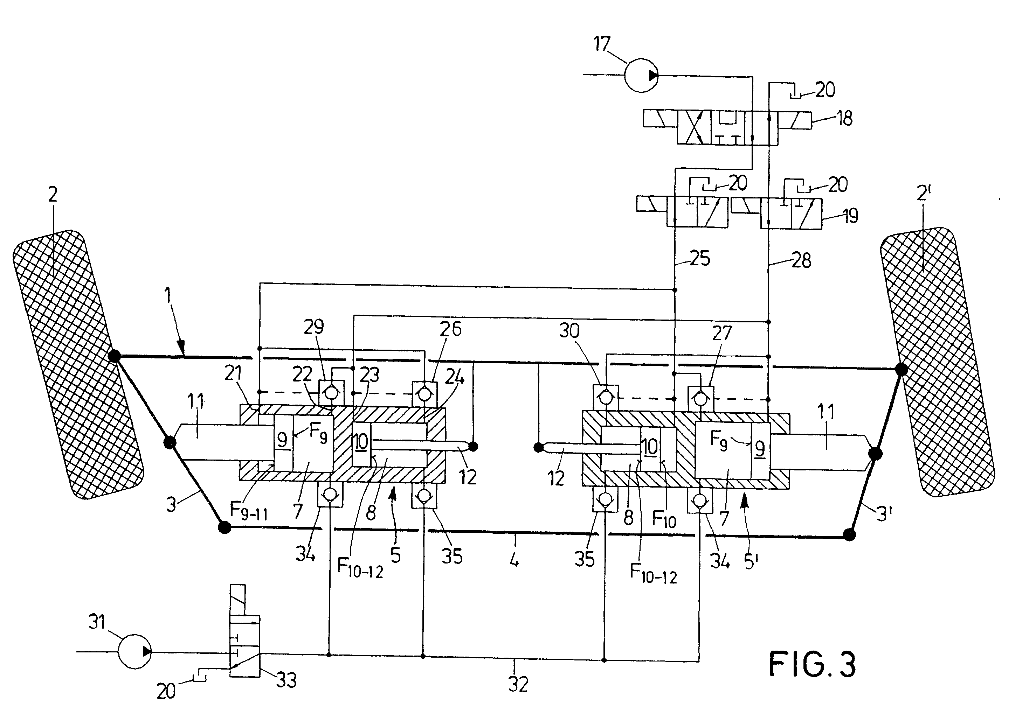

Wenn entsprechend Fig. 3 eine Lenkbewegung nach links ausgeführt werden soll, dann werden über die erste Druckflüssigkeits-Leitung 25 die Kolben-Ring-Fläche $F9-11$ des Lenkantriebs 5 und die Kolbenfläche $F_{10}$ des Lenkantriebs 5' mit Druckflüssigkeit beaufschlagt. Über die Leitung 25 werden außerdem die Kolben-Ring-Fläche $F_{10-12}$ des Lenkantriebs 5 und die Kolbenfläche $F_9$ des Lenkantriebs 5' mit Druck beaufschlagt, wozu die Rückschlag-Ventile 26, 27 entsperrt werden, sodass der Kolben 10 des Lenkantriebs 5 und der Kolben 9 des Lenkantriebs 5' in ihrer Endlage 14 bzw. 16 gehalten werden. Die zweite Druckflüssigkeits-Leitung 28 ist in diesem Fall drucklos, wie sich aus den Stellungen der Ventile 18, 19 in Fig. 3 ergibt.

Durch die oben geschilderten Größenverhältnisse der Kolbenfläche $F_9$ und $F_{10}$ einerseits und der Kolben-Ring-Flächen $F_{9-11}$ und $F_{10-12}$ wird erreicht, dass eine Lenkbewegung zuerst nach einer Seite und dann durch die Mittel-Stellung zur anderen Seite immer über die in Fig. 1 dargestellte stabile Mittel-Stellung geht, in der sich die Kolben 9, 10 in ihren Endlagen 15, 14 befinden.

Für eine Not-Zentrierung ist eine durch eine Pumpe angedeutete Druckflüssigkeits-Notversorgungs-Einheit 31 vorgesehen, bei der es sich um eine Pumpe, aber auch um einen Druckbehälter handeln kann, oder für die entsprechend der EP 01 106 880.6 die Federn des Federungssystems des Fahrzeugs herangezogen werden können. Diese Einheit ist über eine Notversorgungs-Leitung 32 mit den Teilen der Zylinder-Räume 7, 8 verbunden, über die die Kolben-Fläche $F_9$

und die Kolben-Ring-Fläche $F_{10-12}$ der Lenkantriebe 5, 5' beaufschlagt werden. In der Leitung 32 ist ein Mehrwege-Ventil 33 vorgesehen, das in bestromten Zustand geschlossen und in stromlosen Zustand geöffnet ist. Außerdem befinden sich jeweils am Anschluss der Leitung 32 in die Zylinder-Räume 7, 8 Rückschlag-Ventile 34, 35, die einen Durchfluss der Druckflüssigkeit vom Ventil 33 her in die geschilderten Bereiche der Zylinder-Räume 7, 8 zulassen. Bei einer Leckage in der Druckflüssigkeits-Hauptversorgungs-Einheit 17 oder bei einem Zusammenbruch der elektronischen Steuerung werden alle Ventile 18, 19, 33 stromlos geschaltet, sodass - entsprechend der Darstellung in Fig. 1 - die Druckflüssigkeits-Leitungen 25, 28 ebenfalls drucklos sind. Die Rückschlag-Ventile 26, 27 und 29, 30 bleiben also gesperrt. Das stromlose Ventil 33 wird auf die Notversorgungs-Einheit 31 geschaltet, die die Kolben-Flächen $F_9$ und die Kolben-Ring-Flächen $F_{10-12}$ mit Druckflüssig-keit beaufschlagt, sodass die Kolben 9 und 10 in ihren Endlagen 15, 14 und damit die Räder 2, 2' in ihrer Mittellage fixiert werden.

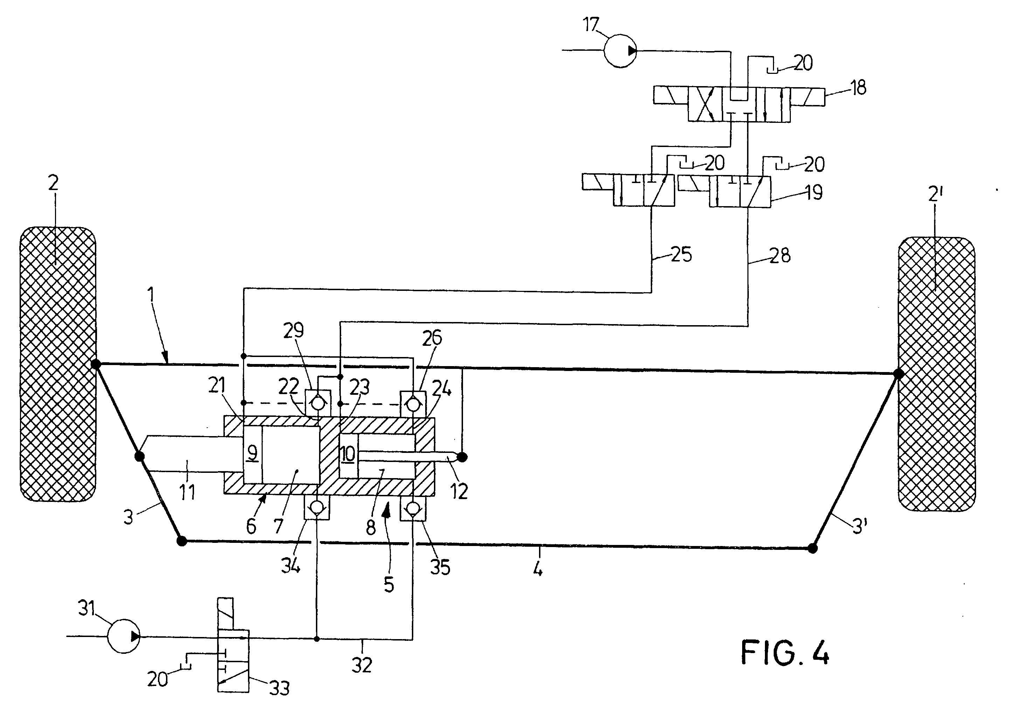

In Fig. 4 ist dargestellt, dass die Lenkbewegungen einerseits und die Not-Zentrierung der Hinter-Räder 2, 2' auch mittels nur eines Lenkantriebs 5 folgen können, der in seinem Rundaufbau identisch mit den zuvor geschilderten Lenkantrieben 5, 5' ist und der lediglich größer ausgeführt sein muss, um die entsprechenden Kräfte aufzubringen. Die hydraulische Schaltung und Beaufschlagung und der Funktionsablauf ist identisch zum zuvor Geschilderten, sodass von einer erneuten Beschreibung Abstand genommen werden kann. In Fig. 4 werden insoweit die selben Bezugsziffern wie in den Figuren 1 bis 3 verwendet. Die Kraftbeaufschlagung der Hinter-Achse ist lediglich unsymmetrisch.

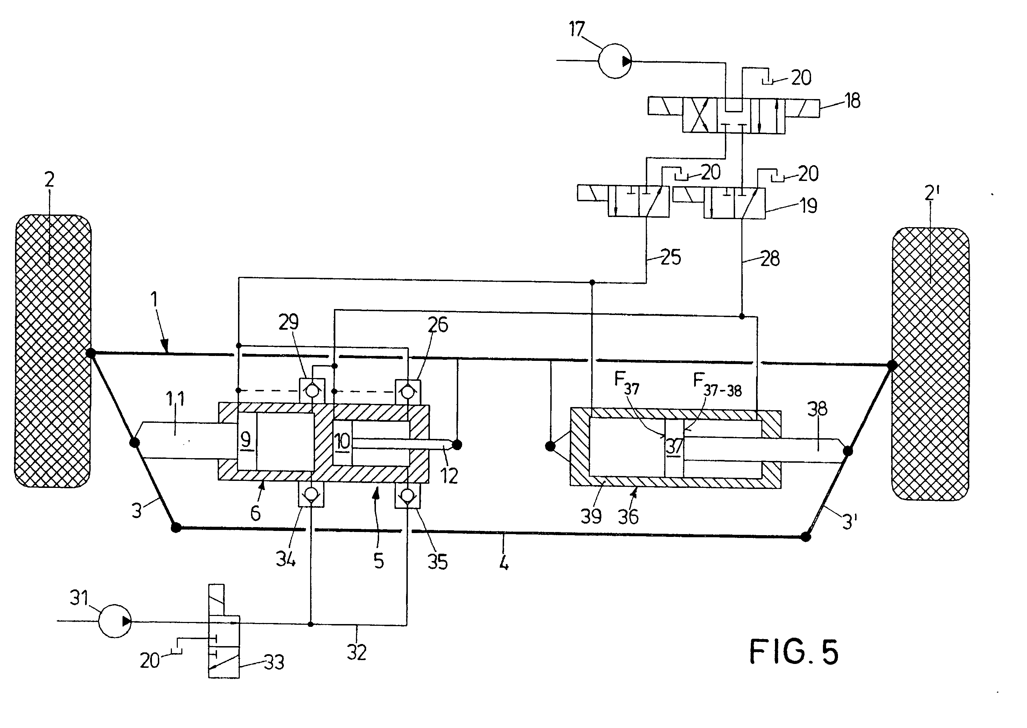

In Fig. 5 ist dargestellt, dass die Lenkbewegungen einerseits und die Not-Zentrierung andererseits die Hinter-Achse mittels lediglich eines Lenkantriebs 5 der zuvor geschilderten Art ausgeführt werden kann, wobei an Stelle des zweiten Lenkantriebs 5' ein einfacher doppelseitig beaufschlagbarer Kolben-Zylinder-Antrieb 36 vorgesehen ist, dessen am Kolben 37 angebrachte Kolbenstange 38 mit dem Achsschenkel 3' verbunden ist, während sein Gehäuse 39 fest mit dem Hinterachs-Körper 1 verbunden ist. Die Kolben-Fläche $F_{37}$ wird von der ersten Druckflüssigkeits-Leitung 25 beaufschlagt, während die Kolben-Ring-Fläche $F_{37-38}$ von der zweiten Druckflüssigkeits-Leitung 28 beaufschlagt wird. Wenn eine Rechts-Lenkung erfolgen soll, dann wird die Kol-ben-Ring-Fläche $F_{37-38}$ über die zweite Druckflüssig-keits-Leitung 28 mit Druckflüssigkeit beaufschlagt, wäh-rend die Kolben-Fläche $F_{37}$ über die erste Druckflüssig-keitsleitung 25 drucklos gemacht wird. Die Kolbenstange 38 wird ins Gehäuse 39 eingeschoben. Bei einer Links-Lenkung erfolgt die Druckbeaufschlagung und Druckentlastung in umgekehrter Richtung.

**Patentansprüche**

1. Hinter-Achse für ein Fahrzeug,

   - mit lenkbaren Hinter-Rädern (2, 2'),
   - mit mindestens einem mit einem Hinter-Rad (2, 2') gekoppelten hydraulisch beaufschlagbaren Lenkantrieb (5, 5'),
   - mit einer Druckflüssigkeits-Hauptversorgungs-Einheit (17) zur Beaufschlagung des Lenkantriebs (5, 5') mit Druckflüssigkeit und
   - mit einer Einrichtung zur Not-Zentrierung der Hinter-Räder (2,2') in einer Mittel-Stellung für Geradeaus-Fahrt,

   **dadurch gekennzeichnet,**
   **dass** der Lenkantrieb (5, 5') zwei jeweils in einem Gehäuse (6) angeordnete, mit einander entgegengesetzt gerichteten Kolbenstangen (11,12) versehene Kolben (9, 10) aufweist, wobei eine Kolbenstange (11) mit einem Hinter-Rad (2, 2') in Lenkverbindung gekoppelt und eine Kolbenstange (12) mit der Hinter-Achse (1) verbunden ist,
   **dass** die Kolben (9, 10) über eine erste und eine zweite Druckflüssigkeits-Leitung (25, 28) derart mit Druckflüssigkeit beaufschlagbar bzw. druckentlastbar sind, dass die Kolben (9, 10) sich bei einer Mittel-Stellung der Hinter-Räder (2, 2') für Geradeaus-Fahrt jeweils in einer Endlage (15, 14) im Gehäuse (6) befinden und
   **dass** eine Druckflüssigkeits-Notversorgungs-Einheit (31) zur Druckbeaufschlagung der Kolben (9, 10) für eine Mittel-Stellung der Hinter-Räder (2, 2') vorgesehen ist.

2. Hinter-Achse nach Anspruch 1, **dadurch gekennzeichnet, dass** jedem Hinter-Rad (2, 2') ein Lenkantrieb (5, 5') zugeordnet ist.

3. Hinter-Achse nach Anspruch 1, **dadurch gekennzeichnet,**
   **dass** einem Hinter-Rad (2) ein Lenkantrieb (5) zugeordnet ist und dass mit dem anderen Hinter-Rad (2') ein mit dem Lenk-Antrieb (5) hydraulisch gekop-pelter doppelseitig beaufschlagbarer Kolben-Zylin-der-Antrieb (36) gekoppelt ist.

4. Hinter-Achse nach einem der Ansprüche 1 bis 3, **dadurch gekennzeichnet,**
   **dass** die Druckflüssigkeits-Notversorgungs-Einheit (31) über eine Notversorgungs-Leitung (32) und in diese geschaltete Rückschlag-Ventile (34, 35) mit den Kolben (9, 10) verbunden ist.

5. Hinter-Achse nach einem der Ansprüche 1 bis 4, **dadurch gekennzeichnet,**
   **dass** bei einer Rechts-Lenkung der Hinter-Räder (2, 2') nur der eine Kolben (10) und bei einer Links-Lenkung nur der andere Kolben (9) aus seiner Endlage (14, 15) für die Mittel-Stellung für Geradeaus-Fahrt mit Druckmittel beaufschlagbar ist.

6. Hinter-Achse nach einem der Ansprüche 1 bis 5, **dadurch gekennzeichnet,**
**dass** für die Kolben-Fläche $F_9$ des einen Kolbens (9) im Vergleich zur Kolben-Fläche $F_{10}$ des anderen Kolbens (10) gilt: $F_9 > F_{10}$ und
**dass** für die Kolben-Ring-Fläche $F_{9-11}$ des einen Kolbens (9) im Vergleich zur Kolben-Ring-Fläche $F_{10-12}$ des anderen Kolbens (10) gilt: $F_{9-11} < F_{10-12}$.

7. Hinter-Achse nach einem der Ansprüche 1 bis 6, **dadurch gekennzeichnet,**
**dass** die Kolben (9, 10) miteinander fluchtend in einem gemeinsamen Gehäuse (6) angeordnet sind.

**Claims**

1. Rear suspension for a vehicle,

   - comprising controllable rear wheels (2, 2'),
   - comprising at least one coupled hydraulic chargeable steering drive (5, 5'),
   - comprising a hydraulic fluid main supply unit (17) for charging the steering drive (5, 5') with hydraulic fluid and
   - comprising a device for emergency centering the rear wheels (2, 2') in a neutral position for straightforward drive,

      **characterized**
   **in that** the steering drive (5, 5') comprises two pistons (9, 10), each arranged in a housing (6) and provided with piston rods (11, 12) arranged opposite to one another, wherein one piston rod (11) is coupled in steering tie with a rear wheel (2, 2') and one piston rod (12) is connected with the rear suspension (1),
      **in that** the pistons (9, 10) are chargeable with hydraulic fluid and relievable from pressure, respectively, over a first and a second hydraulic fluid conduit such, that the pistons (9, 10) in a neutral position of the rear wheels (2, 2') for straightforward drive are arranged each in a final position (15, 14) in the housing (6) and
   **in that** a hydraulic fluid emergency supply unit (31) is provided for pressurization of the pistons (9, 10) for a neutral position of the rear wheels (2, 2').

2. Rear suspension according to claim 1, **characterized**
      **in that** a steering drive (5, 5') is allocated to each rear wheel (2, 2').

3. Rear suspension according to claim 1, **characterized**
**in that** one steering drive (5) is allocated to one rear wheel (2) and that a hydraulically coupled reversibly chargeable piston cylinder drive (36) is coupled with the other rear wheel (2').

4. Rear suspension according to one of claims 1 to 3, **characterized**
**in that** the hydraulic fluid emergency supply unit (31) is connected to the pistons (9, 10) via a emergency supply conduit (32) and return valves connected therein.

5. Rear suspension according to one of claims 1 to 4, **characterized**
**in that** in case of a rightward steering of the rear wheels (2, 2') only the one piston (10) and in case of a leftward steering only the other piston (9) from its final position (14, 15) for a neutral position for straightforward drive is chargeable with pressure means.

6. Rear suspension according to one of claims 1 to 5, **characterized**
**in that** $F_9 > F_{10}$ applies for the piston surface $F_9$ of the one piston (9) compared to the piston surface $F_{10}$ of the other piston (10) and
**in that** $F_{9-11} < F_{10-12}$ applies for the piston ring surface $F_{9-11}$ of the one piston (9) compared to the piston surface $F_{10-12}$ of the other piston (10).

7. Rear suspension according to one of claims 1 to 6, **characterized**
**in that** the pistons (9, 10) are arranged in a common housing (6) in alignment.

**Revendications**

1. Essieu arrière pour un véhicule, comportant

   - des roues arrière directrices (2, 2'),
   - au moins un entraînement de direction (5, 5') pouvant être alimenté par voie hydraulique, qui est couplé à l'une des roues arrière (2, 2'),
   - une unité d'alimentation principale (17) de liquide sous pression pour l'alimentation en liquide sous pression de l'entraînement de direction (5, 5'), et
   - un dispositif destiné au centrage de secours des roues arrière (2, 2') dans une position centrale pour une marche en ligne droite,

      **caractérisé en ce que**
      l'entraînement de direction (5, 5') comporte deux pistons (9, 10) disposés dans un corps (6), avec des tiges de piston (11, 12) orientées à l'opposé l'une de l'autre, une tige de piston (11) étant couplée en liaison de direction à une roue arrière (2, 2'), et une tige de piston (12) étant reliée à l'essieu arrière (1),

   **en ce que** les pistons (9, 10) peuvent être alimentés en liquide sous pression ou détendus en pression par l'intermédiaire d'une première et d'une deuxième conduite (25, 28) de liquide sous pression de telle sorte que, dans une position centrale pour une marche en ligne droite des roues arrière (2, 2'), les pistons (9, 10) se trouvent respectivement dans une position finale (15, 14) dans le corps (6), et

   **en ce qu'**il est prévu une unité d'alimentation de secours (31) de liquide sous pression afin d'alimenter les pistons (9, 10) en pression pour une position centrale des roues arrière (2, 2').

2. Essieu arrière selon la revendication 1, **caractérisé en ce qu'**un entraînement de direction (5, 5') est associé à chaque roue arrière (2, 2').

3. Essieu arrière selon la revendication 1, **caractérisé en ce qu'**un entraînement de direction (5) est associé à une roue arrière (2), et **en ce qu'**un entraînement à piston et cylindre (36) pouvant être alimenté des deux côtés, qui est couplé par voie hydraulique à l'entraînement de direction (5), est couplé à l'autre roue arrière (2').

4. Essieu arrière selon l'une quelconque des revendications 1 à 3, **caractérisé en ce que** l'unité d'alimentation de secours (31) de liquide sous pression est reliée aux pistons (9, 10) par l'intermédiaire d'une conduite d'alimentation de secours (32) et de clapets de retenue (34, 35) disposés dans cette dernière.

5. Essieu arrière selon l'une quelconque des revendications 1 à 4, **caractérisé en ce que**, lors d'un braquage vers la droite des roues arrière (2, 2') seul le piston (10) peut être alimenté en liquide sous pression, et lors d'un braquage vers la gauche seul l'autre piston (9) peut être alimenté en liquide sous pression pour le déplacement de sa position finale (14, 15) dans la position centrale pour une marche en ligne droite.

6. Essieu arrière selon l'une quelconque des revendications 1 à 5, **caractérisé en ce que,**

   pour la surface de piston $F_9$ du piston (9) par rapport à la surface de piston $F_{10}$ de l'autre piston (10) : F9 > F10 s'applique, et

   **en ce que**, pour la surface annulaire de piston $F_{9-11}$ du piston (9) par rapport à la surface annulaire de piston $F_{10-12}$ de l'autre piston (10) : $F_{9-11} < F_{10-12}$ s'applique.

7. Essieu arrière selon l'une quelconque des revendications 1 à 6, **caractérisé en ce que** les pistons (9, 10) alignés entre eux sont disposés dans un corps commun (6).

FIG.1

FIG.2

EP 1 364 858 B1

8

FIG.3

FIG. 4

EP 1 364 858 B1

FIG. 5